(19) Europäisches Patentamt
European Patent Office
Office européen des brevets

(11) **EP 2 365 277 A1**

(12) **EUROPEAN PATENT APPLICATION**
published in accordance with Art. 153(4) EPC

(43) Date of publication:
**14.09.2011 Bulletin 2011/37**

(51) Int Cl.:
**G01B 5/20** *(2006.01)*

(21) Application number: **09826016.9**

(22) Date of filing: **27.10.2009**

(86) International application number:
**PCT/JP2009/068362**

(87) International publication number:
**WO 2010/055766 (20.05.2010 Gazette 2010/20)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **12.11.2008 JP 2008289434**

(71) Applicant: **Mitsubishi Heavy Industries, Ltd.
Tokyo 108-8215 (JP)**

(72) Inventors:
• **OTSUKI, Naohiro
Ritto-shi
Shiga 520-3080 (JP)**
• **YANASE, Yoshikoto
Ritto-shi
Shiga 520-3080 (JP)**
• **MASUO, Koichi
Ritto-shi
Shiga 520-3080 (JP)**

(74) Representative: **Henkel, Breuer & Partner
Patentanwälte
Maximiliansplatz 21
80333 München (DE)**

(54) **METHOD OF MEASURING GEAR**

(57) Provided is a method of measuring a gear wherein the movement range of a stylus is reduced during a measurement by reducing the distance of movement of the stylus in order to downside a machine. A method for measuring the profile of a gear by performing a synchronizing control on the movement of a stylus and the rotation of a work, and by moving the stylus linearly in a state where the stylus is kept in contact with the right tooth flank or left tooth flank according to the rotation of the work, wherein a tangent touching a contact point which is located after rotation of a predetermined rotation angle $\alpha$ in one direction from a contact point on the base circle of the work, and a tangent touching a contact point which is located after rotation of a predetermined rotation angle $\alpha$ in the opposite direction from a contact point on the base circle of the work are set, the stylus is moved along a tangent when the right tooth flank is measured and moved along another tangent when the left tooth flank is measured, and the intersection of two tangents is set at the middle point between the measurement start position and the measurement end position.

Fig.3

**Description**

TECHNICAL FIELD

The present invention relates to a gear measurement method for measuring a tooth profile of a gear to be measured.

BACKGROUND ART

In general, when a gear to be machined is machined by a gear cutting machine such as a gear shaping machine, a gear hobbing machine, and a gear grinding machine, after the shape of the tooth surface, including the tooth profile and the tooth trace, of at least one machined gear taken from a machined lot is measured, the accuracy thereof is checked, and then the remaining unmachined lot is machined. Moreover, in the case where a gear to be machined is large, since a defective must not be produced, finishing is performed after machining and measurement are repeated several times with a machining allowance left. Such measurement of the shape of the tooth surface of a gear to be machined has been performed with a gear measuring machine independent of a gear cutting machine.

However, separately providing a gear cutting machine and a gear measuring machine produces the necessity of the work of replacing a gear to be machined therebetween. Accordingly, workability decreases. To cope with this, various gear cutting machines have been provided recently, each of which is made capable of measuring the shape of the tooth surface of a machined gear on the machine for the purpose of improving workability.

Such a gear cutting machine including a gear measuring instrument is disclosed in, for example, Patent Literature 1.

PRIOR ART DOCUMENT

PATENT DOCUMENT

Patent Document 1: Japanese Patent No. 2995258

SUMMARY OF THE INVENTION

PROBLEM TO BE SOLVED BY THE INVENTION

In the above-described conventional gear measuring instrument, the tooth profile of a gear to be machined is measured by moving a probe along a tangent line to an involute base circle with the probe in contact with a tooth face of the gear to be machined, by synchronous control of the movement of the probe in the directions of Y and Z axes and the rotation of a gear to be machined.

However, in the case where a scheme based on a base circle tangent line such as described above is used to measure the tooth profile of a large gear to be machined, the amount of travel of a probe is large, particularly with respect to the direction of the Y axis. This increases a moving range of the probe in a measurement, and thus may increase the size of a gear measuring instrument.

Accordingly, the present invention has been made to solve the above-described problem, and an object of the present invention is to provide a gear measurement method which makes it possible to reduce the size of a machine by reducing the amount of travel of a probe and thus reducing a moving range of the probe in a measurement.

MEANS FOR SOLVING THE PROBLEM

In order to solve the above-described problem, the present invention provides a gear measurement method in which a tooth profile of a gear to be measured is measured by linearly moving a probe in accordance with rotation of the gear to be measured, with the probe in contact with one tooth face of the gear to be measured or another tooth face thereof, by synchronous control of movement of the probe and the rotation of the gear to be measured. The gear measurement method is characterized by comprising: setting a one-side tangent line touching a one-side tangent point positioned by being rotated from a reference point on a base circle of the gear to be measured in one direction by a predetermined rotation angle, and an other-side tangent line touching an other-side tangent point positioned by being rotated from the reference point on the base circle of the gear to be measured in another direction by the predetermined rotation angle; moving the probe along the one-side tangent line when measuring the one tooth face; moving the probe along the other-side tangent line when measuring the other tooth face; and positioning an intersection point of the one-side tangent line and the other-side tangent line between a measurement start point and a measurement end point on each of the one-side tangent line and the other-side tangent line.

EFFECT OF THE INVENTION

Accordingly, in the gear measurement method according to the present invention, since the amount of travel of a probe can be reduced, the moving range of the probe in a measurement becomes small. Thus, the size of a machine can be reduced.

BRIEF DESCRIPTION OF THE DRAWINGS

[Fig. 1] Fig. 1 is a schematic diagram of a gear measuring instrument which uses a gear measurement method according to one embodiment of the present invention.
[Fig. 2] Fig. 2 is a view showing a workpiece on which a tooth profile measurement is being performed by a probe.
[Fig. 3] Fig. 3 is a view showing the way in which the probe comes in contact with opposite tooth faces of the workpiece in a measurement.
[Fig. 4] Fig. 4 is a view showing the measurement principle of the gear measurement method according to the one embodiment of the present invention.

MODE FOR CARRYING OUT THE INVENTION

Hereinafter, a gear measurement method according to the present invention will be described in detail with reference to the drawings.

EMBODIMENT

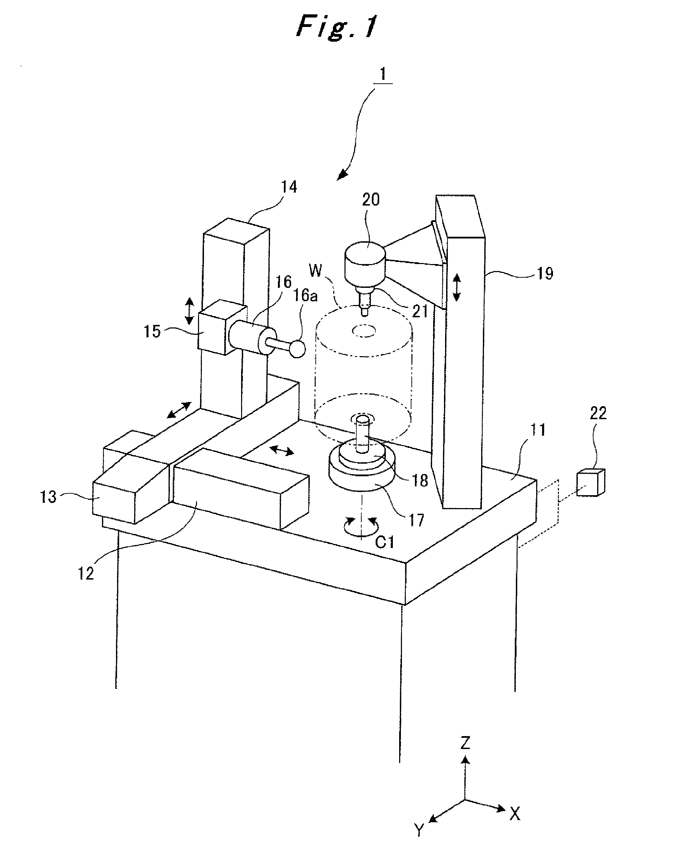

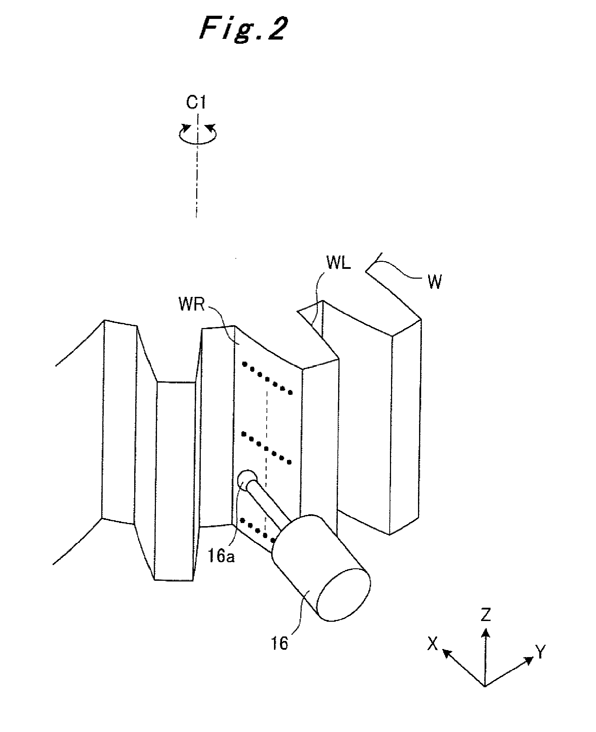

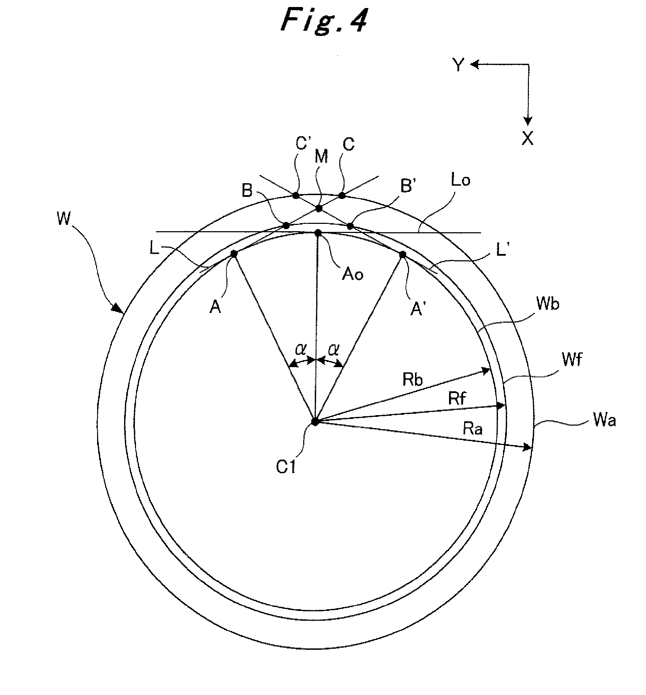

A gear measuring instrument 1 shown in Fig. 1 is intended to measure the tooth profile of a large workpiece (gear to be measured, gear to be machined) W after grinding such as shown in Fig. 2.
As shown in Fig. 1, a base 11 is provided in a lower portion of the gear measuring instrument 1. On the upper surface of this base 11, a guide rail 12 is fixed to extend in the direction of a horizontal X axis, and a guide rail 13 is slidably supported to extend in the direction of a horizontal Y axis. The guide rails 12 and 13 are disposed perpendicular to each other. The guide rail 13 is supported to be movable in the direction of the X axis with respect to the guide rail 12. Further, on the guide rail 13, a guide rail 14 extending in the direction of a vertical Z axis is supported to be movable in the direction of the Y axis.
On a side surface of the guide rail 14, a movable body 15 is supported to be movable up and down in the direction, of the Z axis. A measuring device 16 is attached to the movable body 15. A probe 16a is provided at the tip of this measuring device 16.
Moreover, on the upper surface of the base 11, a rotary table 17 is supported to be rotatable about a vertical workpiece rotation axis C1. On the upper surface of this rotary table 17, a lower center 18 is provided coaxia 11y with the rotary table 17. Furthermore, a column 19 is provided on the upper surface of the base 11 at a side of the rotary table 17 to stand upright. On a front surface of the column 19, a center head 20 is supported to be movable up and down in the direction of the Z axis. At the tip of this center head 20, an upper center 21 is supported to be rotatable about the workpiece rotation axis C1.
Specifically, the workpiece W can be held between the lower and upper centers 18 and 21 by lowering the upper center 21 with the center head 20. Rotating the rotary table 17 with the workpiece W held in this way causes the workpiece W to rotate about the workpiece rotation axis C1.
In the gear measuring instrument 1, an NC unit 22 is provided which comprehensively controls the entire gear measuring instrument 1. This NC unit 22 is connected to, for example, the guide rails 12, 13, and 14, the movable body 15, the measuring device 16, the rotary table 17, and the like. The NC unit 22 is configured to perform an accuracy measurement of the tooth profile of the workpiece W based on detected displacements of the probe 16a by synchronous control of the movement of the measuring device 16 (probe 16a) in the directions of the X, Y, and Z axes and the rotation of the workpiece W about the workpiece rotation axis C1 based on pre-inputted gear specifications of the workpiece W to be measured and tooth profile measurement points thereof.
Next, a method of measuring the tooth profile of the workpiece W after grinding will be described with reference to Figs. 2 to 4.
First, the workpiece W is ground to form right tooth faces WR and left tooth faces WL in this workpiece W. It should be noted that gear specifications from which a predetermined gear shape can be obtained are given to the workpiece W. Of these gear specifications, the radius of a base circle Wb is denoted by Rb, the radius of a dedendum circle Wf is denoted by Rf, and the radius of an addendum circle Wa is denoted by Ra (see Fig. 4). Subsequently, a measurement of the tooth profile of the workpiece W after grinding is started with the workpiece W after grinding held between the lower center 18 and the upper center 21.

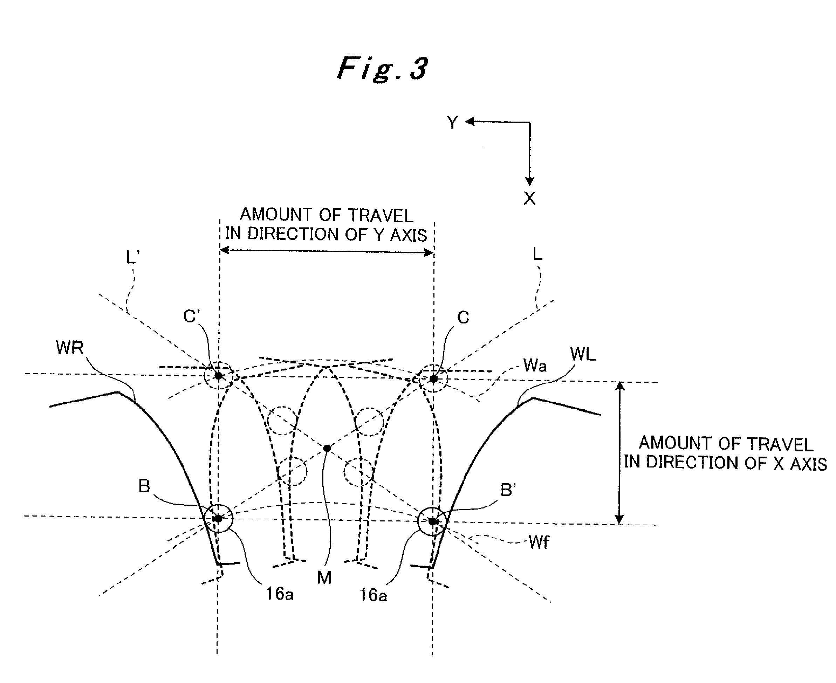

A tooth profile measurement of a right tooth face WR of the workpiece W starts with slightly rotating the workpiece W about the workpiece rotation axis C1 as shown in Fig. 3. Thus, a tooth space of the workpiece W is faced toward measuring device 16. Then, the probe 16a is brought into contact with the intersection point of the right tooth face WR of the workpiece W and the dedendum circle Wf by driving the measuring device 16 in the directions of the X, Y, and Z axes. In other words, this intersection point is a measurement start point B for the right tooth face WR.

Subsequently, in the state in which the probe 16a is in contact with the measurement start point B, the measuring device 16 is driven in the directions of the X and Y axes to move the probe 16a along a tangent line L, and the rotary table 17 is driven to rotate the workpiece W in one direction. It should be noted that the tangent line L is a tangent line touching a tangent point A on the base circle Wb of the workpiece W. Details of this will be described later.

This causes the probe 16a to move in the tooth depth (a tooth profile) direction in contact with the right tooth face WR of the workpiece W. Thus, a tooth profile measurement is started. At this time, the difference between a target tooth profile and a measured actual tooth profile is obtained as a tooth profile error. When there is no tooth profile error, an involute curve or a straight line indicating that there is no error is outputted. On the other hand, when there is a tooth profile error, a curve or straight line which varies in accordance with irregularities is outputted.

The probe 16a further slides on the right tooth face WR toward the top of the tooth, and reaches the intersection point of the right tooth face WR and the addendum circle Wa. Then, the tooth profile measurement is finished. In other words, this intersection point is a measurement end point C for the right tooth face WR.

On the other hand, a tooth profile measurement of a left tooth face WR of the workpiece W starts with slightly rotating the workpiece W about the workpiece rotation axis C1 as shown in Fig. 3. Thus, a tooth space of the workpiece W is faced toward measuring device 16. Then, the probe 16a is brought into contact with Lhe intersection point of the left tooth face WL of the workpiece W and the dedendum circle Wf by driving the measuring device 16 in the directions of the X and Y axes. In other words, this intersection point is a measurement start point B' for the left tooth face WL.

Subsequently, in the state in which the probe 16a is in contact with the measurement start point B', the measuring device 16 is driven in the directions of the X and Y axes to move the probe 16a along a tangential line L', and the rotary table 17 is driven to rotate the workpiece W in the other direction. It should be noted that the tangent line L' is a tangent line touching the tangent point A' on the base circle Wb of the workpiece W. Details of this will be described later.

This causes the probe 16a to move in the tooth depth (a tooth profile) direction in contact with the left tooth face WL of the workpiece W. Thus, a tooth profile measurement is started. At this time, the difference between a target tooth profile and a measured actual tooth profile is obtained as a tooth profile error. When there is no tooth profile error, an involute curve or a straight line indicating that there is no error is outputted. On the other hand, when there is a tooth profile error, a curve or straight line which varies in accordance with irregularities is outputted.

The probe 16a further slides on the left tooth face WL toward the top of the tooth, and reaches the intersection point of the left tooth face WL and the addendum circle Wa. Then, the tooth profile measurement is finished. In other words, this intersection point is a measurement end point C' for the left tooth face WL.

It should be noted that a tooth profile measurement may start with any of the right tooth face WR and the left tooth face WL of the workpiece W. Moreover, measuring all the one faces of all the teeth may be followed by measuring all the other faces of all the teeth, or measuring one face of each tooth may be followed by measuring the other face of the tooth. Furthermore, as shown in Fig. 2, the above-described tooth profile measurement is similarly performed at several positions along the face width on each tooth face.

Moreover, in the gear measurement method according to the present invention, the tangent lines L and L' are set as described below so that the amount of travel of the probe 16a (measuring device 16) with respect to the direction of the Y axis may be minimized. Method of setting these tangent lines L and L' will be described as follows with reference to Figs. 3 and 4.

First, a tangent point (reference point) Ao is set at which a tangent line Lo parallel to the Y axis touches the base circle Wb of the workpiece W on the measuring device 16 side. Subsequently, the point rotated from tangent point Ao in one direction by a predetermined rotation angle $\alpha$ is defined as a tangent point A. The tangent line touching this tangent point A is denoted by L. On the other hand, the point rotated from tangent point Ao in the other direction by the predetermined rotation angle $\alpha$ is defined as a tangent point A' . The tangent line touching this tangent point A' is denoted by L'.

Further, the intersection point of the tangent line L and the dedendum circle Wf is set as the measurement start point B on the right tooth face WR, and the intersection point of the tangent line L and the addendum circle Wa is set as the measurement end point C on the right tooth face WR. In other words, the amount of travel of the probe 16a in the X-Y plane in a measurement of the right tooth face WR is the distance between the measurement start point B and the measurement end point C.

Moreover, the intersection point of the tangent line L' and the dedendum circle Wf is set as the measurement start point B' on the left tooth face WL, and the intersection point of the tangent line L' and the addendum circle Wa is set as the measurement end point C' on the left tooth face WL. In other words, the amount of travel of the probe 16a in the X-Y plane in a measurement of the left tooth face WL is the distance between the measurement start point B' and the measurement end point C'.

It should be noted that the tangent lines L and L' touch the tangent points A and A' set at the points rotated from the tangent point Ao in opposite directions by the rotation angle $\alpha$, and therefore intersect each other. This intersection point is denoted by M.

A condition for minimizing the amount of travel of the probe 16a with respect to the direction of the Y axis is that the distance between the measurement start point B (B') and the intersection point M is equal to the distance between the intersection point M and the measurement end point C (C'). In other words, when the relationship expressed by equation (1) below holds true, the amount of travel of the probe 16a with respect to the direction of the Y axis is at a minimum.

[Formula 1]

$$\overline{BM} = \overline{MC} \quad -------- \quad (1)$$

Moreover, it is found that when the relationship expressed by equation (1) holds true, the tangent point A, the measurement start point B, and the measurement end point C have the relationship expressed by equation (2) below.

[Formula 2]

$$\frac{\overline{AB} + \overline{AC}}{2} = \overline{AM} \quad --------- \quad (2)$$

Thus, using the base circle radius Rb, the dedendum circle radius Rf, the addendum circle radius Ra, and the rotation angle $\alpha$, equation (2) can be expressed as equation (3) below. Thus, the rotation angle $\alpha$ can be found by deriving equation (4) below from equation (3).

[Formula 3]

$$\frac{\sqrt{Rf^2 - Rb^2} + \sqrt{Ra^2 - Rb^2}}{2} = Rb \cdot \tan \alpha \quad --------- \quad (3)$$

$$\alpha = \tan^{-1} \left( \frac{\sqrt{Rf^2 - Rb^2} + \sqrt{Ra^2 - Rb^2}}{2Rb} \right) \quad --------- \quad (4)$$

The amount of travel of the probe 16a with respect to the direction of the Y axis is the distance between the measurement end point C and the measurement end point C'. Accordingly, the minimum amount of travel can be found using equation (5) below.

[Formula 4]

$$\left. \begin{array}{l} \overline{CC'} = 2 \cdot \overline{MC} \cdot \cos \alpha \\ \qquad = (\overline{AC} - \overline{AB}) \cdot \cos \alpha \end{array} \right\} --------- \quad (5)$$

Accordingly, the gear measurement method according to the present invention, can reduce the distance between the measurement end points C and C', which is the amount of travel of the probe 16a with respect to the direction of the Y axis by defining as tangent points A and A' the points rotated from the tangent point Ao on the base circle Wb of the workpiece W in opposite directions by the rotation angle $\alpha$, respectively, moving the probe 16a along the tangent lines L and L' touching these tangent points A and A' in accordance with the rotation of the workpiece W, and setting the respective midpoints of the segments connecting the measurement start points B and B' to the measurement end points C and C' at the intersection point M of these tangent lines L and L'. Accordingly, the moving range of the probe 16a in the X-Y plane can be reduced. As a result, even in the case where the tooth profile of a large workpiece W is measured, a measurement can be performed in a small space. Thus, the size of a machine can be reduced.

Moreover, since the probe 16a is moved along the tangent lines L and L' in accordance with the rotation of the workpiece W, the contact angle of the probe 16a with respect to the right tooth face WR and the left tooth face WL of the workpiece W can always be maintained constant from the measurement start points B and B' to the measurement end points C and C'. This can reduce the occurrence of a measurement error.

INDUSTRIAL APPLICABILITY

The present invention can be applied to a gear measurement method which can measure the shape of the tooth surface of a gear with high accuracy regardless of the size thereof.

【FORMULA 1】

$$\overline{BM} = \overline{MC} \quad \text{-------- (1)}$$

【FORMULA 2】

$$\frac{\overline{AB} + \overline{AC}}{2} = \overline{AM} \quad \text{--------- (2)}$$

【FORMULA 3】

$$\frac{\sqrt{Rf^2 - Rb^2} + \sqrt{Ra^2 - Rb^2}}{2} = Rb \cdot \tan\alpha \quad \text{--------- (3)}$$

$$\alpha = \tan^{-1}\left(\frac{\sqrt{Rf^2 - Rb^2} + \sqrt{Ra^2 - Rb^2}}{2Rb}\right) \quad \text{-------- (4)}$$

【FORMULA 4】

$$\overline{CC'} = 2 \cdot \overline{MC} \cdot \cos\alpha$$
$$= (\overline{AC} - \overline{AB}) \cdot \cos\alpha \qquad \Big\} \text{-------- (5)}$$

**Claims**

1. A gear measurement method in which a tooth profile of a gear to be measured is measured by linearly moving a probe in accordance with or the gear to be measured, with the probe in contact with one tooth face of the gear to be measured or another tooth face thereof, by synchronous control of movement of the probe and the rotation of the gear to be measured, the gear measurement method being **characterized by** comprising:

   setting a one-side tangent line touching a one-side tangent point positioned by being rotated from a reference point on a base circle of the gear to be measured in one direction by a predetermined rotation angle, and an other-side tangent line touching an other-side tangent point positioned by being rotated from the reference point on the base circle of the gear to be measured in another direction by the predetermined rotation angle;
   moving the probe along the one-side tangent line when measuring the one tooth face;
   moving the probe along the other-side tangent line when measuring the other tooth face; and
   positioning an intersection point of the one-side tangent line and the other-side tangent line between a measurement start point and a measurement end point on each of the one-side tangent line and the other-side tangent line.

*Fig.1*

# *Fig.2*

C1

WL

W

WR

16a

16

Z

X

Y

Fig.3

# Fig.4

## INTERNATIONAL SEARCH REPORT

| International application No. |
| --- |
| PCT/JP2009/068362 |

A. CLASSIFICATION OF SUBJECT MATTER
*G01B5/20*(2006.01)i

According to International Patent Classification (IPC) or to both national classification and IPC

B. FIELDS SEARCHED

Minimum documentation searched (classification system followed by classification symbols)
G01B5/20

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2009 |
| Kokai Jitsuyo Shinan Koho | 1971–2009 | Toroku Jitsuyo Shinan Koho | 1994–2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 63-307313 A (Willy Hoefler), 15 December 1988 (15.12.1988), claims; page 4, upper left column, line 1 to page 6, upper right column, line 10; fig. 1 to 6 & US 4852402 A1    & GB 2205161 A & DE 3717666 A    & CH 676040 A & DD 270669 A    & IT 1219936 B | 1 |
| A | JP 58-096208 A (Mitsubishi Heavy Industries, Ltd.), 08 June 1983 (08.06.1983), entire text; all drawings (Family: none) | 1 |

| ☒ Further documents are listed in the continuation of Box C. | ☐ See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 20 November, 2009 (20.11.09) | 01 December, 2009 (01.12.09) |

| Name and mailing address of the ISA/ | Authorized officer |
| --- | --- |
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2009/068362 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2-194311 A (Mitsubishi Heavy Industries, Ltd.), 31 July 1990 (31.07.1990), entire text; all drawings (Family: none) | 1 |
| A | JP 9-178461 A (Osaka Seimitsu Kikai Kabushiki Kaisha), 11 July 1997 (11.07.1997), entire text; all drawings (Family: none) | 1 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2995258 B